# EUROPEAN PATENT APPLICATION

(11) **EP 2 506 594 A1**
(43) Date of publication of application: **03.10.2012**
(21) Application number: 12161827.6
(22) Date of filing: 28.03.2012
(51) Int. Cl.: H04N 21/61, H04N 21/418, H04N 21/262

(54) **Media transceiver for relaying media information from a media control server to a presentation device**

(30) Priority: 28.03.2011 FI 20115293
(71) Applicant: First Technology Oy, 20200 Turku (FI)
(72) Inventor: Antilla, Petri, 20100 Turku (FI)
(74) Representative: Maskula, Silla Marjatta

(57) **Abstract**

The invention relates to an arrangement, a device, a method and a computer program product, by means of which media information may be relayed from a media control server to a display device. According to the invention media information arranged on the media control server (103) is delivered to a media transceiver (105) wirelessly, the media information is received and stored in the media transceiver (105), and at least part of the stored media information is played in a device (107) intended for presenting media.
Furthermore, the arrangement includes means (105d) for preventing data transfer between the memory means (105c) and the device (107) intended for presenting media, when media information is being stored in the memory means (105c).

## Description

The present invention relates to relaying and playing media. The invention especially relates to an arrangement, a device, a method and a software product arranged for relaying and playing media.

### PRIOR ART

So-called info screens have been taken into use to a greater extent, by means of which desired information may be relayed to an audience. The screens are usually placed in such public spaces, where people move and the media to be presented thus reaches as large an amount of audience as possible. The media to be presented may be of several sorts - most often the purpose is to distribute news, guides, notices and advertisements. Most used screens for distributing media are among others LCD and plasma screens and video projectors.

The use of media screens has increased to such an extent that it has been sensible to design arrangements, by means of which media may be brought to said screens as cost-effectively as possible. Such arrangements have turned out to be especially advantageous, where media may be delivered to the screen via a remote connection, advantageously with an Internet-based connection. Such arrangements usually consist of a server, which a user of the arrangement operates, and a media player, which downloads the material to be presented from the server and relays it to the used screen. The server is usually a common PC, where an application related to media control functions for example on a Linux or Windows operating system. The user may upload the presentations to the server from anywhere for example via a www browser. The media player is a device, which is connected to the screen, and via which the media may be presented on the screen. The connection of the media player to the Internet is most often implemented with a fixed connection, whereby the cost may turn out to be a threshold factor. The media player is connected to the screen or a corresponding playing device.

Current media players are quite large with regards to their size. This has limited their use especially in connection with small screens, because small screens are often selected for locations, where larger screens may due to space restrictions not be used. So-called service desk screens may be mentioned as an example of such screens. A problem with known media players is further also that they need their own power source, which again restricts the use location.

One development trend in the field is that media player properties are developed in the screens. They may for example play images and videos from different mass memories. A USB-based (Universal Serial Bus) memory stick may for example be utilised in this arrangement, with which memory stick the media to be presented may be delivered to the media screen. The media screen automatically identifies a memory stick connected to a USB port and plays the images and videos stored on the memory stick on the screen according to predetermined instructions. A problem with such an arrangement is however that it is not cost-effective, especially because the media presentation cannot be controlled by remote use. In practice this means that if it is for example desired to change the content of the presentation, it requires the user's presence, making the arrangement slow and difficult to use.

A further problem with the approach in question is that different manufacturers' thoughts regarding the properties of the media player as a part of the screen element may vary, with the consequence that the media supplier and arrangement operator may need to modify the media to be presented and the method for supplying the media for each screen type. This means numerous technical and economic challenges.

### SUMMARY

It is an object of the invention to eliminate or at least reduce disadvantages related to prior art.

It is an object of the invention to provide a device, an arrangement and a method, by means of which media information may be relayed from a media control server to a device intended for presenting media. It is especially an object of the invention to provide a device, an arrangement and a method, by means of which the media information to be presented may easily be changed.

A typical media transceiver according to the invention for relaying media information from a media control server to a device intended for presenting media comprises first connection means for connecting the media transceiver to the device intended for presenting media, second connection means for connecting the media transceiver wirelessly to a data network, where the media control server is situated, means for receiving media information from the media control server, and memory means for storing the media information. A typical media transceiver according to the invention further comprises means for preventing data transfer between the memory means and the device intended for presenting media, when media information is being stored in the memory means.

The data transfer between the memory means and the device intended for presenting media is prevented by detaching the memory means for the duration of the storing of media information for example by software, or by means of one or more controllable switches, from the device intended for presenting media.

When the first connection means are so-called wired connection means, by which a wired connection is provided between the media transceiver and the device intended for presenting media, the media transceiver according to the invention does not need to be physically detached from the device intended for presenting media in order to change the media information contained in the media transceiver.

The media transceiver may via the first connection means be connected to the screen element or a corresponding means for playing media.

The media transceiver according to the invention comprises means for establishing a wireless connection to an external network, such as the Internet. Such means for establishing a wireless connection may for example be means for establishing a WLAN (Wireless Local Area Network) connection or for establishing a 3G (3rd Generation) connection to a mobile network.

According to an advantageous embodiment of the invention the means for preventing data transfer are arranged to set the first connection means in an inactive state, when media information is being stored in the memory means. The first connection means are set in an inactive state for the duration of the time when media information received via the second connection means is stored in the memory means. When the first connection means are in an inactive state, the device intended for presenting media cannot be used to read media information stored in the memory means of the media transceiver. When the media information received from the media control server has been stored in the memory means, the first connection means are returned to an active state, whereby the device intended for presenting media can read media information stored in the memory means.

The first connection means may be set in an inactive state for example by controlling the state of one or more pins of the first connection means, for example with one or more switches.

According to one embodiment of the invention the first connection means (105a) are a USB connection. Thus the media transceiver is meant to be connected to the USB port of a device intended for presenting media. The connection means of a media transceiver provided with a USB connection may be set in an inactive state by arranging the pins of the USB connector into a state, where the device intended for presenting media does not recognise the media transceiver connected to the USB port, whereby the device thinks that no device is connected to the USB port. One or more of the pins of the USB connector may for example be set in a so-called floating state.

According to one embodiment of the invention electric current is brought into the media transceiver via said USB connection.

According to one embodiment of the invention the media transceiver is simulated as a USB memory to the device intended for presenting media. The media transceiver is provided with means, by means of which it is possible to retrieve the media to be presented to the media transceiver's own memory via a wireless connection and to further simulate the media transceiver as a USB memory to the device, to which it is connected. The device thus functions like an adapter between the screen's own media player and the media control server. The device intended for presenting media identifies the media transceiver connected to the USB port, when the first connection means of the media transceiver are in an active state or when they are changed from the inactive state to the active state. Typically the device intended for presenting media is arranged to start playing the media information stored in the media transceiver immediately after the media transceiver has been identified or a certain time after the identification.

According to one embodiment of the invention the first connection means are means for establishing a wireless connection to at least one device intended for presenting media. For example a Bluetooth or ZigBee connection may be used for establishing the wireless connection.

According to one embodiment of the invention the first connection means are arranged to convey electric current to the media transceiver.

According to one embodiment of the invention the media transceiver comprises a power source.

The media transceiver may be arranged to function with the electric current obtainable via the first connection means or with a power source in the media transceiver. It is also possible that the electric current obtainable via the first connection means functions as the main power source for the media transceiver, and the power source situated in the media transceiver, such as a chargeable battery, which may be charged with the electric current obtainable via the connection means, functions as a backup power source. If the first connection means are set in an inactive state so that electric current cannot be transferred via the first connection means, the media transceiver must have a power source, which gives the necessary electric current during the time when media information is being stored in the media transceiver.

According to one embodiment of the invention the media transceiver comprises means for retrieving and receiving administration data related to the presenting of media from the media control server according to a predetermined schedule.

According to one embodiment of the invention the media transceiver is provided with means, by means of which the media transceiver at predetermined time intervals makes contact with the server to check, if there is new media to be presented to be downloaded and/or if instructions related to the presenting of some certain media information have been stored on the server.

According to one embodiment of the invention the media transceiver comprises means for interpreting the received media information. The received media information may contain a message, which contains information for example regarding new media to be downloaded on the server, the media type, the target screens of the media and/or the manner of publishing the media, such as time.

A typical arrangement according to the invention for relaying media information from a media control server to a device intended for presenting media, which media control server comprises an interface for storing and administrating media information on the server, comprises a media transceiver according to the invention connected between the media control server and the device intended for presenting media, forming a means for receiving media information from the media control server, a means for storing the media information and a means for at least partly relaying the received and stored media information to the device intended for presenting media.

The arrangement according to the invention is arranged to relay media from a centralised administration system to media transceivers connected to presenting devices, such as screens, which media transceivers comprise means for receiving, storing and relaying media to be presented on the screen.

In one embodiment of the invention the media transceiver is arranged to retrieve media information from the media server according to a predetermined schedule.

According to one embodiment media information and/or information related to the presenting thereof is in the arrangement retrieved from the media control server. This information retrieval is advantageously arranged according to a predetermined schedule.

The arrangement according to another embodiment of the invention comprises means for indexing and interpreting the media to be relayed, so that the media information may be stored and presented in the arrangement in a desired manner.

In one embodiment of the invention the media transceiver is connected detachably to the device intended for presenting media. The connecting is according to one embodiment made via a USB connection.

In a typical method according to the invention for relaying media information from a media control server to a device intended for presenting media a media transceiver is connected via first connection means to the device intended for presenting media, media information stored in memory means is played in the device intended for presenting media, the media transceiver is wirelessly connected via second connection means to the media control server, media information arranged on the media control server is sent to the media transceiver, the media information sent from the media control server is received via the second connection means, and the received media information is stored in the memory means. In a typical method according to the invention data transfer between the memory means and the device intended for presenting media is prevented, when media information is being stored in the memory means.

In a method according to one embodiment of the invention the data transfer between the memory means and the device intended for presenting media is prevented by setting the first connection means in an inactive state for the duration of the time when media information is being stored in the memory means.

In a method according to one embodiment of the invention media information is retrieved from the media control server according to a predetermined schedule.

In a method according to one embodiment of the invention instructions for at least partly presenting the received and stored media information are retrieved from the media control server according to a predetermined schedule.

According to one method according to the invention the media information to be presented is relayed from the media control arrangement to the media transceivers, in which the media to be presented is stored and which are arranged to publish the media information in a manner previously planned.

In a method according to one embodiment of the invention a file system of the memory means is mounted on the device intended for presenting media with software, when it is desired to activate/start the media presentation. When it is desired to update the media, the file system of the memory means is unmounted from the device intended for presenting media with software. After the unmounting from the media device, the memory of the memory means is wirelessly updated. In connection with the updating, the file system may be mounted on a software/microprocessor responsible for the updating as the file system thereof. After the updating the file system may be unmounted from the microprocessor and again mounted on the device intended for presenting media.

A computer program product according to one embodiment of the invention is arranged to implement the steps of the method according to the invention.

An advantage of the invention is primarily that the media transceiver, the arrangement, the method and/or the computer program product according to the invention may be used to cost-effectively deliver media remotely to desired presenting means, such as screens. The size of the device according to the invention is small, enabling utilisation of the media transceiver in space-critical targets.

### BRIEF DESCRIPTION OF THE DRAWING

In the following, advantageous embodiments of the invention are described somewhat more thoroughly with reference to the appended drawings, in which
- Figure 1: illustrates an arrangement according to the invention,
- Figures 2a and 2b: illustrate some media transceivers according to the invention and
- Figure 3: illustrates a method according to the invention.

### DETAILED DESCRIPTION OF THE DRAWING

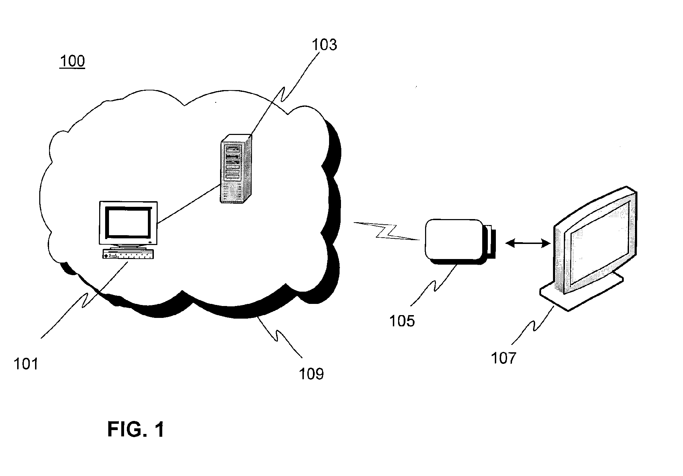

Figure 1 shows one exemplary arrangement 100, which arrangement 100 is arranged to relay media from a centralised administration arrangement to media transceivers 105 connected to devices intended for presenting media, such as screens 107. One arrangement according to the invention comprises a centralised media control server 103, by means of which media information, its publication and at least partly also the devices to which the media to be published is brought, are administrated. Media information here means at least media to be published, but when necessary also other information related to media to be published, such as data related to publication administration. An operator administrates the media server 103 for example from his own work station 101. According to one embodiment the media control server 103 may be used to control media transceivers 105 comprised in the arrangement and thus media presented on the screens 107 connected to the media transceivers 105. The media control server 103 may also be used to administrate media intended for the screens 107 and, if necessary, matters related to media distribution, such as matters related to media storage, publication time and/or location. This may be done for example so that instructions related to the publication of the media are included in the media information to be delivered to the media transceiver 105. Alternatively this may be done for example so that the media transceiver 105 regularly establishes a connection to the media control server 103 to check if instructions regarding the publication of the media have been stored there. Regular connection establishing and state checking is generally known with the term "polling". The media control server 103 and the work station 101 are advantageously situated in a data network 109, such as the Internet. As is shown in Figure 1, in the arrangement 100 according to the invention contact is made from the data network 109 to the media transceivers 105 in a wireless manner.

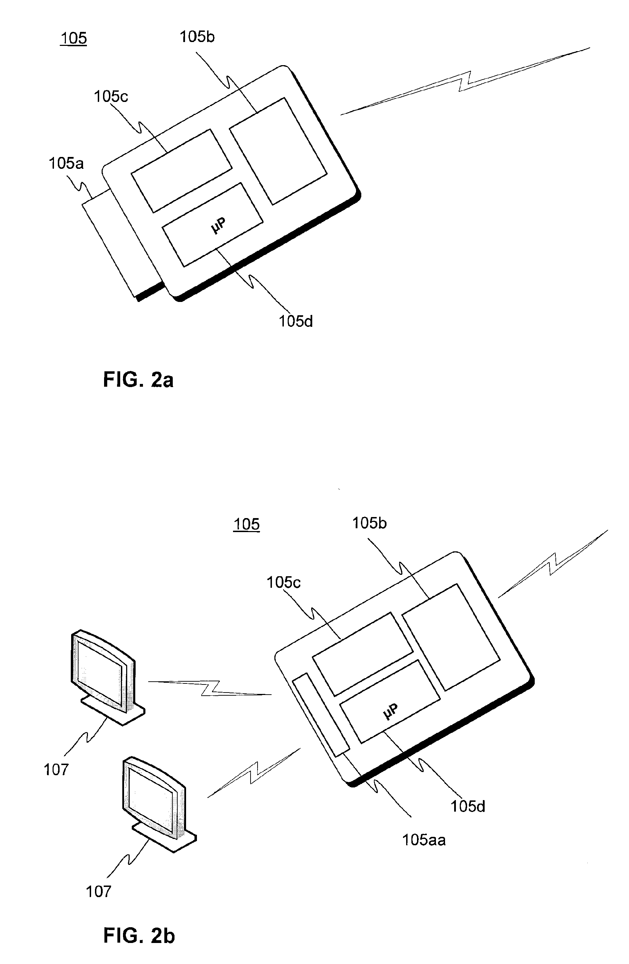

Figure 2a shows a media transceiver 105 according to one embodiment of the invention. The media transceiver 105 comprises first connection means 1 05a for connecting the media transceiver 105 for example to a screen 107, where the media to be published is meant to be presented. The first connection means 105a of the media transceiver 105 form a first interface for connecting the media transceiver 105 to a screen. Such connection means 105a are for example a USB (Universal Serial Bus) connection, an HDMI (High Definition Multimedia Interface) connection or a VGA (Video Graphics Array) connection. In an embodiment according to the invention a wireless short-range network connection, such as a Bluetooth or ZigBee connection, may be utilised as the media transceiver's 105 interface to the screen 107.

Electric current is advantageously brought to the media transceiver 105 according to the invention via said first connection means 105a. An advantage with such a solution is that the media transceiver 105 does not need its own power source. This further enables the use of a media transceiver according to the invention in space-critical locations.

The media transceiver according to the invention further comprises second connection means 105b for establishing a wireless connection to a data network 109, such as the Internet. Such second means 105b for establishing a wireless connection may for example be means for establishing a WLAN (Wireless Local Area Network) connection or for establishing a 3G (3rd Generation) connection to a mobile network, via which a connection to a data network 109 is obtained.

The media transceiver 105 advantageously also comprises means, by means of which a secured connection, such as for example a HTTPS (Hypertext Transfer Protocol Secure) connection and/or a VPN (Virtual Private Network) connection, may be established between the media transceiver and the server. Such data security is advantageously implemented with software. According to one embodiment both the media transceiver 105 and the media control server 103 are provided with necessary software components in order to achieve a desired data security.

In addition to the above-mentioned interfaces the media transceiver 105 according to the invention comprises memory means 105c for storing the media to be presented. Such memory means are for example a reprogrammable flash memory, which is suitable especially due to its small size and slight power consumption for the media transceiver 105 according to the invention. In addition to media information, software solutions related to the function of the media transceiver 105 may be stored in the memory means 105c, such as software components related to control and distribution of media. With their aid media may for example be received, identified and distributed in a desired and predetermined manner. Said software solutions are brought into operation by executing them in a processor unit 105d situated in the media transceiver 105, which may also have memory elements for storing for example an operating system. The processor unit 105d is among others arranged to control the operation of the first connection means 105a, so that the first connection means 1 05a are set in an inactive state for the duration of the time when media information is being stored in the memory means 105c. Figure 2 shows only the elements which are essential for the invention. The media transceiver 105 according to the invention may also comprise other component and/or software solutions in order to achieve the desired functionality.

According to one embodiment of the invention the media transceiver 105 is provided with a solution, for example with software, by means of which downloading of media from the server to the memory means 105c of the media transceiver 105 is achieved according to predetermined criteria. Such criteria may for example be matters related to time, location or the media itself. Media is for example advantageously downloaded at night to the media transceiver 105, when the utilisation degree of the data communications networks is lower. Such matters naturally depend on the use purpose of the media being distributed. When the media is stored in the storage means of the media transceiver 105, the media transceiver 105 may be simulated as a USB memory to the device to which it is connected. The device thus functions like an adapter between the screen 107 and the media control server 103.

According to one embodiment of the invention the media transceiver 105 is arranged to establish a connection at predetermined time intervals to the media control server 103 to check if there is new media to be presented to be downloaded into the memory of the media transceiver 105 and further presented. Alternatively said media transceiver 105 establishes a connection at predetermined time intervals to check if instructions have been stored on the media control server 103 related to the publication of some specific media, which is in some cases already stored in the media transceiver.

According to another embodiment the media transceiver 105 comprises means for interpreting a message coming from the media control server 103. The received message may for example comprise information about new media to be downloaded on the media control server 103, the media type, the target screens of the media and/or the manner of publication of the media, such as the time. Advantageously at least a part of this data may be relayed in the message coming from the media control server 103 and in this case the media transceiver 105 is arranged to combine the information in the message with the downloaded media. In another embodiment according to the invention the media to be downloaded comprises information related to the media to be presented. Such information may for example relate to the manner of publication of the message and/or the publication time.

Figure 2b shows a media transceiver 105 according to one embodiment of the invention, which media transceiver otherwise comprises the same elements and functionalities as the media transceiver 105 in Figure 2a, but the first connection means 105a in Figure 2a are replaced with connection means 105aa, by means of which media may be relayed from the media transceiver 105 to several screens 107 simultaneously. This is especially advantageously achieved by using a short-range wireless connection, such as a Bluetooth or ZigBee connection. The processor unit 105d is arranged to control the operation of the first connection means 1 05aa, so that the first connection means 105aa are set in an inactive state for the duration of the time when media information is being stored in the memory means 105c. This embodiment makes the invention especially tempting in the economic sense, because in this way the number of needed media transceivers 105 can be decreased.

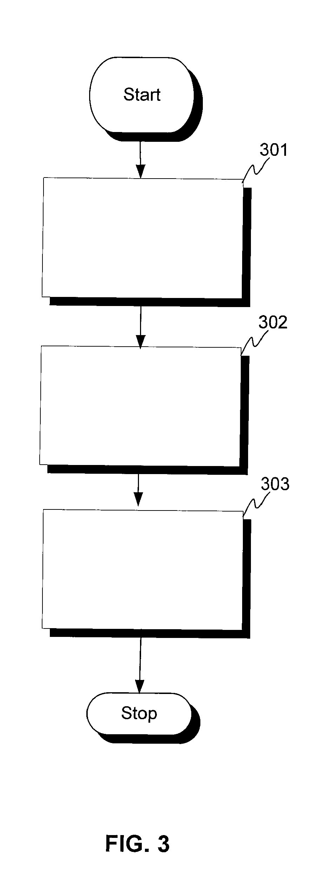

Figure 3 shows a method according to the invention. In the first step 301 of the method according to the invention media information stored on the media control server 103 is delivered to the media transceiver 105. This is done via a wireless connection. In the next step 302 the received media information is stored in the media transceiver 105. In this step the first connection means 105a, 1 05aa are in an inactive state. In step 303 the first connection means 105a, 1 05aa are set in an active state and at least part of the stored media is played in a desired player, such as a screen 107, as controlled by the media transceiver 105. This means that at least the actual media intended to be played is played without information related to the administration of the media.

According to an advantageous embodiment of the invention the media and/or information related to the media is interpreted in the media transceiver 105. This means that administration data related to the publication of the media, such as publication instructions, which may for example be information related to the manner and/or time of presentation, is analysed in the media transceiver 105. Such information may be delivered to the media transceiver with a separate message, which is however linked to the actual media to be presented for example with the aid of some identifier. Alternatively such information may be delivered in a header field of the actual media. The interpretation of the media may be done for example immediately as the media information is received or alternatively only after it is stored in the memory means 105c of the media transceiver 105. According to one embodiment of the invention the encryption of the received media information is decrypted in the media transceiver 105 either directly when receiving the media information or alternatively after it is stored. According to a method according to the invention instructions for at least partly presenting the received and stored media information are retrieved from the media control server 103. According to one embodiment the retrieval of the instructions is done according to a predetermined schedule. In one embodiment according to the invention the media transceiver 105 is provided with means, advantageously with software, which enable a media player to retrieve media information on its own initiative.

A computer program product according to the invention is arranged to carry out the steps of the method according to the invention when it is run in a processor unit 1 05d of the media transceiver 105.

The following is a more detailed description of a practical implementation of the media transceiver 105 according to the invention. The description is one example of a possible implementation and does not in any way restrict the inventive idea of the present invention. The media transceiver 105 comprises a small 32-bit microprocessor 105d, a memory 105c and a WLAN module 105b. The media transceiver 105 has a simple operating system and software implemented with C language. The media transceiver 105 is capable of communicating via the WLAN network and further via the Internet with other devices connected to the network. In this case the communication occurs with the media control server 103. The software of the device supports http and HTTPS protocols for communication and data transfer. The protocols of the media transceiver 105 and the media control server 103 are arranged to function together. The media transceiver has a ROM type memory for storing presentation material. The presentation material thus remains in the memory for example if a power outage occurs. The processor unit 105d has traditional components, such as a RAM memory. The media transceiver 105 also has IO functions typical for a USB memory.

Even though the above-presented description contains many specifications, these are mainly intended to illustrate the invention and they should not be taken as restrictions of the protective scope of the invention. It should also be noted that many specifications may be combined in different ways in one or more embodiments. It is obvious to someone skilled in the art that the invention is not limited merely to the above-described examples, but the invention may vary within the scope of the claims presented below. The dependent claims present some possible embodiments of the invention, and they are as such not to be considered to restrict the protective scope of the invention.

## Claims

1. A media transceiver (105) for relaying media information from a media control server (103) to a device (107) intended for presenting media, which media transceiver (105) comprises:
- first connection means (105a, 105aa) for connecting the media transceiver (105) to the device (107) intended for presenting media,
- second connection means (105b) for connecting the media transceiver (105) wirelessly to a data network (109), where the media control server (103) is situated,
- means (1 05d) for receiving media information from the media control server (103), and
- memory means (1 05c) for storing media information;
**characterised in that** the media transceiver (105) comprises:
- means (105d) for preventing data transfer between the memory means (105c) and the device (107) intended for presenting media, when media information is being stored in the memory means (1 05c).

2. The media transceiver (105) according to claim 1, **characterised in that** said means (105d) for preventing data transfer are arranged to set the first connection means (105a, 105aa) in an inactive state, when media information is being stored in the memory means (1 05c).

3. The media transceiver (105) according to claim 1 or 2, **characterised in that** said first connection means (1 05a) are a USB connection.

4. The media transceiver (105) according to claim 3, **characterised in that** the means (1 05d) are arranged to simulate the media transceiver (105) as a USB memory to the device (107) intended for presenting media.

5. The media transceiver (105) according to claim 1 or 2, **characterised in that** said first connection means (105aa) are means for establishing a wireless connection to at least one device (107) intended for presenting media.

6. The media transceiver (105) according to any of the preceding claims, **characterised in that** the first connection means (105a, 105aa) are arranged to convey electric current to the media transceiver (105).

7. The media transceiver (105) according to any of the preceding claims, **characterised in that** the media transceiver (105) comprises means (1 05d) for retrieving and receiving administrative information related to the presenting of media from the media control server (103) according to a predetermined schedule.

8. An arrangement for relaying media information from a media control server (103) to a device (107) intended for presenting media, which media control server (103) comprises an interface for storing and administrating media information on the server (103), **characterised in that** the arrangement comprises a media transceiver (105) according to any of the preceding claims connected between said media control server (103) and said device (107) intended for presenting media, forming a means for receiving media information from the media control server (103), a means for storing media information and a means for at least partly relaying the received and stored media information to the device (107) intended for presenting media.

9. The arrangement according to claim 8, **characterised in that** the media transceiver (105) is arranged to retrieve media information from the media control server (103) according to a predetermined schedule.

10. The arrangement according to claim 8 or 9, **characterised in that** the media transceiver (105) is connected in a detachable manner to the device (107) intended for presenting media.

11. A method for relaying media information from a media control server (103) to a device (107) intended for presenting media, which method comprises:
- connecting a media transceiver (105) via first connection means (105a, 1 05aa) to the device (107) intended for presenting media,
- playing media information stored in the memory means (1 05c) in the device (107) intended for presenting media information,
- connecting the media transceiver (105) wirelessly via second connection means (1 05b) to the media control server (103),
- sending media information arranged on the media control server (103) to the media transceiver (105),
- receiving the media information sent by the media control server (103) via the second connection means (1 05b), and
- storing the received media information in the memory means (1 05c);
**characterised in that** data transfer between the memory means (1 05c) and the device (107) intended for presenting media is prevented, when media information is being stored in the memory means (1 05c).

12. The method according to claim 11, **characterised in that** data transfer between the memory means (105c) and the device (107) intended for presenting media is prevented by setting the first connection means (105a, 105aa) in an inactive state for the duration of the time when media information is being stored in the memory means (1 05c).

13. The method according to claim 12 or 13, **characterised in that** media information is retrieved from the media control server (103) according to a predetermined schedule.

14. The method according to any of the preceding claims 11-13, **characterised in that** instructions for at least partly presenting the received and stored media information are retrieved from the media control server (103) according to a predetermined schedule.

15. A computer program product, **characterised in that** said computer program product is adapted to implement method steps according to any of the preceding claims 12-14, when said computer program product is run in a processor unit (1 05d) of a media transceiver (105).
